# EUROPEAN PATENT APPLICATION

(11) **EP 2 327 669 A1**
(43) Date of publication of application: **01.06.2011**
(21) Application number: 10190538.8
(22) Date of filing: 09.11.2010
(51) Int. Cl.: C04B 20/10, C04B 26/16, C04B 26/18

(54) **Colored material coated transparent chip for artificial stone, method of preparing same, and artificial stone including same**

(30) Priority: 10.11.2009 KR 20090108206; 23.04.2010 KR 20100037694
(71) Applicant: Cheil Industries Inc., Gumi-si Gyeongsangbuk-do 730-030 (KR)
(72) Inventor: Jeong, Doo Kyo, Uiwang-si, Gyeonggi-do (KR); Choi, Soo Jheong, Uiwang-si, Gyeonggi-do (KR); Lee, Hee Cheol, Uiwang-si, Gyeonggi-do (KR); Kang, Han Ju, Uiwang-si, Gyeonggi-do (KR); Son, Chang Ho, Uiwang-si, Gyeonggi-do (KR)
(74) Representative: Michalski, Stefan

(57) **Abstract**

The present invention provides transparent chips with natural-like metal texture by coating silica-containing transparent chips with colored material like a metal powder in a highly transparent resin as base resin. The present invention also provides artificial stone with natural-like metal texture and patterns by mixing the colored material coated transparent chips and inorganic filler with the matrix polymer resin. The artificial stone of the present invention is prepared by mixing about 4 to 24 parts by weight of inorganic filler and about 0.1 to 5.0 parts by weight of the colored material coated transparent chips per 1 part by weight of base resin. The colored material coated transparent chips have a gravity of about 2.0 to about 2.65, while the matrix resin has a gravity of about 2.2 to about 2.8, and the gravity of the transparent chips should be equal to or lower than that of the matrix resin in order to distribute transparent chips uniformly in the matrix resin.

## Description

### CROSS-REFERENCE TO RELATED APPLICATION

This application is a continuation of Korean Patent Application Nos. 2009-108206 and 2010-37694, entitled "Colored Material Coated Transparent Chip and Native Rock Combined With Resin Composition Including The Same," which were filed on November 10, 2010 and April 23, 2010, respectively, the latter being filed claiming priority based on the former, and are hereby incorporated by reference in their entirety.

### FIELD OF THE INVENTION

The present invention relates to artificial stone. More particularly, the present invention relates to artificial stone having natural metal-like texture and appearance and transparent chips for preparing the same, which are prepared by coating silica-containing transparent chips with colored material.

### BACKGROUND OF THE INVENTION

In general, artificial stone is referred to as artificially synthetic article having natural stone-like texture and appearance, which is prepared by mixing natural metals in a resin. There are two exemplary artificial stones, unsaturated polyester artificial stone and acrylic artificial stone.

Artificial stone may be used as interior building materials to imitate natural stone, e.g. form kitchen counter tops, wash bowls, dressing tables, bathtubs, wall panels, commercial counters, and so forth, due to their stone-loke appearance, high quality texture, and good weatherability.

Artificial stone is prepared in a single color, in a multi-color by mixing different resins with different colors, or in a natural stone-like texture and appearance by employing chips coated with various materials.

The ultimate goal of the artificial stone technology is how to imitate the natural marble-like texture and appearance which will meet the high quality and the consumers' felt. Accordingly, there has been a great deal of researches for preparing artificial stone having natural stone-like texture and patterns.

Korean Patent Publication No. 2009-59901 discloses an artificial stone employing colored glass chips or colored mirror chips which are prepared with a colored resin composition. In the patent application, epoxy resin is employed as base resin of the artificial stone composition or the colored resin composition.

Korean Patent Publication No. 2009-88147 discloses an unsaturated polyester artificial stone containing gold chips in which silica and/or inorganic material is coated with aqueous peral pigments.

However, neither of the patent applications above provides a high quality artificial stone of natural stone-like patterns and textures. In other words, it is very difficult to impart natural stone-like patterns and textures to artificial stone, and one of the reasons is that it is very difficult to prepare natural-like transparent chips, and a second reason is that the transparent chips are not uniformly distributed in the matrix resin so as to incur breaking phenomena between the transparent chips and the matrix resin.

In order to address the problems of the conventional artificial stones, the present inventors have reached a development of the present invention in which natural-like transparent chips are prepared by employing silica-containing transparent chips and highly transparent resin as base resin thereof and coating them with colored material like a metal powder, and in which the transparent chips are uniformly distributed in the matrix resin by lowering the gravity of the transparent chips than that of the matrix resin.

### SUMMARY OF THE INVENTION

Embodiments of the present invention are therefore directed to a colored material coated transparent chip for artificial stone, method of preparing the transparent chip, and artificial stone containing the same, which substantially overcome one or more problems due to the limitations and disadvantages of the related art.

It is therefore a feature of an embodiment of the present invention to provide transparent chips with natural-like metal texture by coating silica-containing transparent chips with colored material like a metal powder.

It is another feature of an embodiment of the present invention to provide artificial stone with natural-like metal texture and patterns by employing silica-containing transparent chips coated with colored material like a metal powder.

It is a further feature of an embodiment of the present invention to provide artificial stone with natural-like metal texture and patterns by distributing uniformly the transparent chips in the matrix resin to prevent breaking phenomena between the transparent chips and the matrix resin.

It is also a further feature of an embodiment of the present invention to provide a method of preparing the transparent chips for artificial stone with natural-like metal texture and patterns.

It is also a further feature of an embodiment of the present invention to provide a method of preparing artificial stone with natural-like metal texture and patterns.

At least one of the above and other features and advantages may be realized by providing transparent chips with natural-like metal texture by coating silica-containing transparent chips with colored material like a metal powder in a highly transparent resin as base resin.

The silica-containing transparent chips are selected from the group consisting of broken-stone chips, quartz, quartz-silica chips, silica stone powder, quartz glass, synthetic quartz, silica, silicon dioxide, silica glass and mirror.

The representative examples of the colored material are gold powder, silver powder, copper powder, aluminum powder, nickel powder and the like, and one or more thereof may be used in the present invention.

The highly transparent resin as base resin is preferable to have APHA (American Public Health Association) color index of about 10 to 70 when measured in accordance with ASTM D 4890. The exemplary examples of the resin are urethane acrylate resin, unsaturated polyester resin, polyester polyol resin and the like, and one or more thereof may be used.

A curing agent is used in the preparation of the transparent chips for artificial stone of the present invention, and the examples include peroxy ester, polyisocyanate, peroxide and so on.

The transparent chips for artificial stone of the present invention are prepared by mixing about 80 to 500 parts by weight of silica-containing transparent chips, about 0.1 to 5.0 parts by weight of colored material, and about 0.01 to 2.5 parts by weight of curing agent per 1 part by weight of highly transparent resin, curing the mixture in a dry oven, and drying the cured resin mixture at room temperature.

In the present invention, the colored material coated transparent chips are preferable to have a gravity of about 2.0 to about 2.65 and a Mohs hardness of about 5 to 9.

At least one of the above and other features and advantages may be realized by providing artificial stone with natural-like metal texture and patterns by mixing the colored material coated transparent chips and inorganic filler with the matrix polymer resin. The artificial stone of the present invention is prepared by mixing about 4 to 24 parts by weight of inorganic filler and about 0.1 to 5.0 parts by weight of the colored material coated transparent chips per 1 part by weight of base resin. A small amount of curing agent, cross-linking agent, pigment powder, and/or catalyst may be added to the mixture.

The artificial stone according to the present invention is prepared by mixing about 4 to 24 parts by weight of inorganic filler, about 0.1 to 5.0 parts by weight of the colored material coated transparent chips, about 0.01 to 0.05 parts by weight of curing agent, about 0.01 to 0.05 parts by weight of cross-linking agent, about 0.01 to 0.15 parts by weight of pigment powder, and about 0.001 to 0.005 parts by weight of catalyst per 1 part by weight of unsaturated polyester resin as matrix resin, forming the resin mixture in a mold, pressing the resin mixture, and surface-treating. The colored material coated transparent chips are preferable to have a gravity of about 2.0 to about 2.65, while the matrix resin is preferable to have a gravity of about 2.2 to about 2.8. In other words, the gravity of the transparent chips should be equal to or lower than that of the matrix resin in order to distribute transparent chips uniformly in the matrix resin.

### BRIEF DESCRIPTION OF THE DRAWINGS

The above and other features and advantages of the present invention will become more apparent to those of ordinary skill in the art by describing in detail exemplary embodiments thereof with reference to the attached drawings, in which:
Fig. 1 illustrates a photograph of the colored material coated transparent chips prepared in accordance with the present invention; and
Fig. 2 illustrates a photograph of exemplary surface patterns of artificial stone articles according to an embodiment of the present invention.

### DETAILED DESCRIPTION OF THE INVENTION

The present invention relates to artificial stone, more particularly, to artificial stone having natural metal-like texture and appearance and transparent chips for preparing the same, which are prepared by coating silica-containing transparent chips with colored material.

The transparent chips with natural-like metal texture is prepared by coating silica-containing transparent chips with colored material like a metal powder in a highly transparent resin as base resin. The use of silica-containing transparent chips and highly transparent resin imparts natural-like metal texture and patterns to the chips. The colored material may be deposited on the silica-containing transparent chips.

Exemplary examples of the silica-containing transparent chips are broken-stone chips, quartz, quartz-silica chips, silica stone powder, quartz glass, synthetic quartz, silica, silicon dioxide, silica glass, mirror and the like. One or a mixture of at least two kinds of chips may be used in the present invention.

The representative examples of the colored material are gold powder, silver powder, copper powder, aluminum powder, nickel powder and the like, and one or more thereof may be used in the present invention. The colored material may comprise further aluminum paste, hologram, and a mixture thereof.

The highly transparent resin as base resin is preferable to have APHA (American Public Health Association) color index of about 10 to 70 when measured in accordance with ASTM D 4890. The highly transparent resin having an APHA color index of about 10 to 70 can provide the transparent chips with natural-like metal texture and patterns. The exemplary examples of the highly transparent resin are urethane acrylate resin, unsaturated polyester resin, polyester polyol resin and the like, and one or more thereof may be used.

A curing agent is used in the preparation of the transparent chips for artificial stone of the present invention, and the examples include peroxy ester, polyisocyanate, peroxide and so on.

In the present invention, a particular combination of the highly transparent resin and curing agent may have advantage in the quality of the transparent chips. In one embodiment, it is preferable to use urethane acrylate resin as the highly transparent resin and isocyanate as the curing agent. In this case, urethane acrylate resin is preferably used in an amount of about 20 to 50 % by weight and isocyanate in an amount of about 50 to 80 % by weight. In another embodiment, it is preferable to use unsaturated polyester resin as the highly transparent resin and peroxy ester as the curing agent. In this case, unsaturated polyester resin is preferably used in an amount of about 20 to 50 % by weight and peroxy ester in an amount of about 50 to 80 % by weight.

The unsaturated polyester resin as the highly transparent resin in this invention is prepared by mixing about 40 to 90 % by weight of unsaturated polyester resin containing saturated acid and unsaturated acid, having at least one glycol with about 10 to 60 % by weight of monomers for controlling viscosity. In other words, the monomers dilute the unsaturated polyester resin so as to control viscosity. The monomers for controlling viscosity may be a reactive monomer like styrene monomer (SM) or diallyl phthalate (DAP), which functions as a diluent for liquidizing the unsaturated polyester resin at room temperature as well as functions connecting polymer chains by participating in the polymerization.

As the glycol for the unsaturated polyester resin, ethylene glycol, diethylene glycol, propylene glycol, dipropylene glycol, 1,3-buthane diol, 1,6-hexane diol, secondary alcohol such as neopentyl glycol, tertiary alcohol such as glycerin, and quaternary alcohol such as pentaerythrytol may be used. The examples of the saturated acid are phathalic anhydride, terephthalic acid, isophthalic acid and the like, and the examples of the unsaturated acid maleic aicd, fumaric acid, itaconic acid and the like.

The transparent chips for artificial stone of the present invention are prepared by mixing about 80 to 500 parts by weight of silica-containing transparent chips, about 0.1 to 5.0 parts by weight of colored material, and about 0.01 to 2.5 parts by weight of curing agent per 1 part by weight of highly transparent resin, curing the mixture in a dry oven, and drying the cured resin mixture at room temperature. When the transparent chips are prepared under the conditions above, the surface of the chips does not generate phenomena of stickiness or peeling off.

As the colored material dispersed in the highly transparent resin coats the surface of the silica-containing transparent chips, transparent surface is formed on the surface of the chips.

In preparation of the transparent chips for artificial stone, the colored material of metal powder is added to the highly transparent resin and the mixture is uniformly dispersed. To the mixture, a curing agent is added. The mixed resin composition is mixed with silica-containing transparent chips so as to be uniformly coated.

In the present invention, the colored material coated transparent chips are preferable to have a gravity of about 2.0 to about 2.65 and a Mohs hardness of about 5 to 9. The range of gravity is a preferable one which is obtained by coating silica-containing transparent chips with colored material of metal powder. It is preferable that the colored material coated transparent chips have the same surface hardness as sands or silica chips. If not, uniformity cannot be obtained on the grinded surface during the surface-treating. In other words, if the surface hardness of the colored material coated transparent chips is not the same as that of sands or silica chips, the weaker surface of the chips is more grinded during the grinding process so as to produce multiform surface. Accordingly, as glass has a Mohs hardness of about 5 and silica chips have a Mohs hardness of about 7, it is preferable that the colored material coated transparent chips have a Mohs hardness of about 5 to 9 in the present invention.

At least one of the above and other features and advantages may be realized by providing artificial stone with natural-like metal texture and patterns by mixing the colored material coated transparent chips and inorganic filler with the matrix polymer resin. The artificial stone of the present invention is prepared by mixing about 4 to 24 parts by weight of inorganic filler and about 0.1 to 5.0 parts by weight of the colored material coated transparent chips per 1 part by weight of base resin. A small amount of curing agent, cross-linking agent, pigment powder, and/or catalyst may be added to the mixture.

The inorganic filler may include a silica component. The curing agent may be employed in about 0.01 to 0.05 parts by weight, the cross-linking agent in about 0.01 to 0.05 parts by weight, the pigment powder in about 0.01 to 0.15 parts by weight, and the catalysts in about 0.001 to 0.005 parts by weight of catalyst per 1 part by weight of the matrix resin. The matrix resin may be unsaturated polyester resin, poly methyl metharcrylate resin or vinyl ester resin.

The artificial stone according to the present invention is prepared by mixing about 4 to 24 parts by weight of inorganic filler, about 0.1 to 5.0 parts by weight of the colored material coated transparent chips, about 0.01 to 0.05 parts by weight of curing agent, about 0.01 to 0.05 parts by weight of cross-linking agent, about 0.01 to 0.15 parts by weight of pigment powder, and about 0.001 to 0.005 parts by weight of catalyst per 1 part by weight of unsaturated polyester resin as matrix resin, forming the resin mixture in a mold, pressing the resin mixture, and surface-treating.

The colored material coated transparent chips are preferable to have a gravity of about 2.0 to about 2.65, while the matrix resin is preferable to have a gravity of about 2.2 to about 2.8. In other words, the gravity of the transparent chips should be equal to or lower than that of the matrix resin in order to distribute transparent chips uniformly in the matrix resin. Through the uniform distribution of the transparent chips in the matrix resin, breaking phenomena between the transparent chips and the matrix resin are blocked resulting in natural-like metal texture and patterns.

The representative examples of the inorganic filler are silica, aluminum hydroxide, magnesium hydroxide, calcium carboxide, barium sulfoxide, aluminum trihydrate, calcium alumino acid and the like. The silica such silica sands, silica chips, or silica powder is the most preferable to provide a good hardness and to prevent breaking phenomena during the grinding process.

The artificial stone according to the present invention is polished during the grinding process to show natural-like metal texture and patterns on the surface. The natural-like metal texture and patterns of the artificial stone appear to be similar to gig galaxy or medium galaxy.

The invention will be more readily understood by reference to the following exemplary embodiments which have been set forth solely for purposes of exposition and which are not intended to limit the scope of the invention.

### EXAMPLE

### Preparation of Transparent Chips with Natural-like Metal Texture by Coating Silica-containing Transparent Chips with Colored Material:

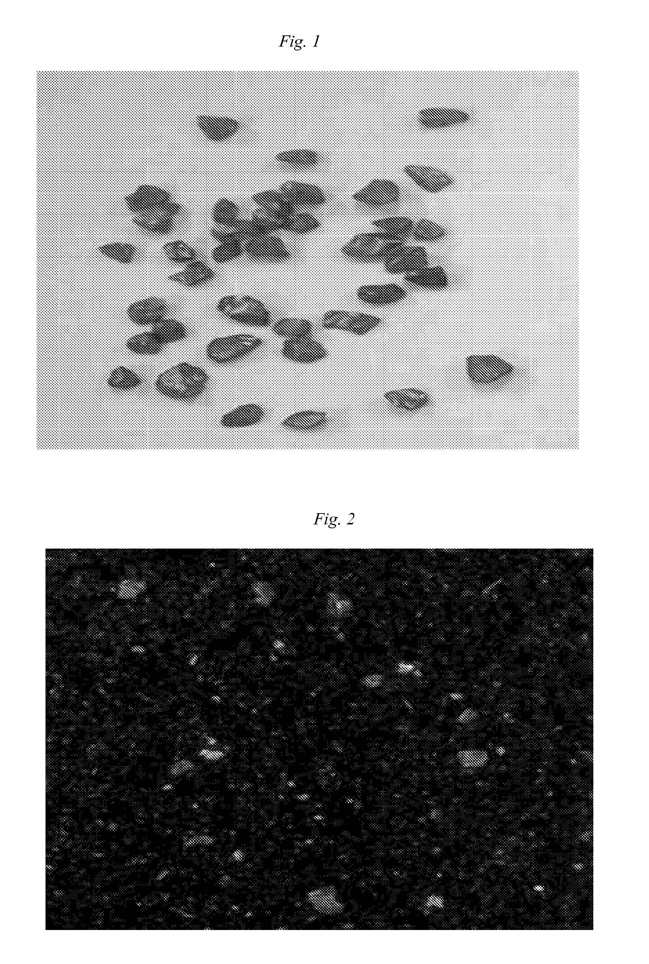

Acrylic urethane resin (product of Norupyo-paints Co., Ltd. of Korea) of 1 part by weight, curing agent for the resin (product of Norupyo-paints Co., Ltd. of Korea) of 2 parts by weight, copper powder (product of Junsung Co., Ltd. of Korea) of 4 parts by weight, and transparent glass chips of a length of about 1.0 to 5.0 mm prepared from transparent glass (product of Aju Industries Co., Ltd. of Korea) of 300 parts by weight are mixed in a mixer. The mixed resin composition is kept in a dry container and cured in an oven at 80°C for about 2 hours, and the cured resin is dried at room temperature over 2 hours. Fig. 1 illustrates a photograph of the colored material coated transparent chips prepared in accordance with this example.

### Preparation of Artificial Stone from Transparent Chips Coated with Colored Material:

Commercial unsaturated polyester resin of 1 part by weight, silica sands of a length of about 0.1 to 1.0 mm of 6.0 parts by weight as inorganic filler, colored material coated transparent chips of 0.3 part by weight, t-butyl peroxy benzoate (AKZO Chemical Co. Ltd) of 0.02 part by weight, silane coupling agent (Hung Pai Chemical Co.) of 0.01 part by weight, 6 % cobalt naphthanate (Jinyang Chemical Co., Ltd.) of 0.002 part by weight, and inorganic pigment (Wooshin pigments Co., Ltd.) of 0.1 part by weight are mixed in a mixer.

After mixing, the resin composition is uniformly kept in a mold which is rectangular. The mold is vibrated and pressed for uniform distribution of the resin composition in the mold. The molded resin composition is pressed and cured and surface-treated like the grinding process so as to prepare artificial stone having natural-like metal texture and patterns.

Fig. 2 illustrates a photograph of exemplary surface patterns of artificial stone articles according to this embodiment. Through observation with physical eyes, we can see the artificial stone according to the present invention shows excellent natural-like metal texture and patterns.

Exemplary embodiments of the present invention have been disclosed herein, and although specific terms are employed, they are used and are to be interpreted by those of ordinary skill in the art that various changes in form and details may be made without departing from the spirit and scope of the present invention as set forth in the following claims.

## Claims

1. Transparent chips for artificial stone with natural-like metal texture and patterns, which is prepared by coating silica-containing transparent chips with colored material and has a gravity of about 2.0 to about 2.65.

2. The transparent chips of claim 1 wherein said silica-containing transparent chips are selected from the group consisting of broken-stone chips, quartz, quartz-silica chips, silica stone powder, quartz glass, synthetic quartz, silica, silicon dioxide, silica glass and mirror.

3. The transparent chips of claim 1 or 2 wherein said colored material is at least one selected from the group of consisting of gold powder, silver powder, copper powder, aluminum powder, and nickel powder.

4. The transparent chips of any of the claims 1 to 3 wherein said colored material comprises further aluminum paste, hologram, and a mixture thereof.

5. The transparent chips of any of the claims 1 to 4 wherein said transparent chips have a Mohs hardness of about 5 to 9.

6. A process of preparing transparent chips for artificial stone which comprises:
mixing silica-containing transparent chips, colored material, curing agent, and highly transparent resin;
curing the mixture in a dry oven; and
drying the cured resin mixture at room temperature;
wherein the highly transparent resin as base resin is preferable to have APHA (American Public Health Association) color index of about 10 to 70 when measured in accordance with ASTM D 4890, and wherein the transparent chips have a gravity of about 2.0 to about 2.65.

7. The process of claim 6 wherein 80 to 500 parts by weight of the silica-containing transparent chips, about 0.1 to 5.0 parts by weight of the colored material, and about 0.01 to 2.5 parts by weight of the curing agent per 1 part by weight of the highly transparent resin are mixed.

8. The process of claim 6 or 7 wherein the highly transparent resin is at least one selected from the group consisting of urethane acrylate resin, unsaturated polyester resin, and polyester polyol resin.

9. The process of any of the claims 6 to 8 wherein the curing agent is peroxy ester, polyisocyanate, peroxide and a mixture thereof.

10. The process of any of the claims 6 to 9 wherein the urethane acrylate resin is preferably used in an amount of about 20 to 50 % by weight and the isocyanate in an amount of about 50 to 80 % by weight.

11. The process of any of the claims 6 to 10 wherein the highly transparent resin is unsaturated polyester resin and the curing agent is peroxy ester.

12. The process of any of the claims 6 to 11 wherein the unsaturated polyester resin contains saturated acid and unsaturated acid, having at least one glycol.

13. The process of claim 12 wherein the glycol is ethylene glycol, diethylene glycol, propylene glycol, dipropylene glycol, 1,3-buthane diol, 1,6-hexane diol, secondary alcohol, tertiary alcohol, or quaternary alcohol, wherein the saturated acid is phathalic anhydride, terephthalic acid, or isophthalic acid, and wherein the unsaturated acid is maleic aicd, fumaric acid, or itaconic acid.

14. The process of any of the claims 11 to 13 wherein The unsaturated polyester resin as the highly transparent resin in this invention is prepared by mixing about 40 to 90 % by weight of unsaturated polyester resin containing saturated acid and unsaturated acid, having at least one glycol with about 10 to 60 % by weight of monomers for controlling viscosity.

15. Artificial stone with natural-like metal texture and patterns, which is prepared by mixing the transparent chips of any one of claims 1 to 5, polymer matrix resin, and inorganic filler.

16. The artificial stone of claim 15 wherein about 4 to 24 parts by weight of the inorganic filler and about 0.1 to 5.0 parts by weight of the colored material coated transparent chips are mixed per 1 part by weight of unsaturated polyester resin as matrix resin.

17. The artificial stone of claim 15 or 16 wherein the matrix resin is unsaturated polyester resin, poly methyl metharcrylate resin or vinyl ester resin.

18. The artificial stone of any of the claims 15 to 17 wherein the artificial stone further comprises curing agent, cross-linking agent, pigment powder, and catalyst.

19. The artificial stone of any one of claim 15 through 18 wherein the transparent chips have a gravity of about 2.0 to about 2.65 and the matrix resin has a gravity of about 2.2 to about 2.8, and wherein the gravity of the transparent chips is equal to or lower than that of the matrix resin.

20. A process of preparing artificial stone, which comprises:
mixing about 4 to 24 parts by weight of inorganic filler, and about 0.1 to 5.0 parts by weight of the colored material coated transparent chips per 1 part by weight of unsaturated polyester resin as matrix resin;
forming the resin mixture in a mold;
pressing the resin mixture; and
surface-treating;
wherein the transparent chips have a gravity of about 2.0 to about 2.65 and the matrix resin has a gravity of about 2.2 to about 2.8, and wherein the gravity of the transparent chips is equal to or lower than that of the matrix resin.
